(19) Europäisches Patentamt / European Patent Office / Office européen des brevets

(11) **EP 3 590 198 B1**

(12) **FASCICULE DE BREVET EUROPEEN**

(45) Date de publication et mention de la délivrance du brevet:
**17.02.2021 Bulletin 2021/07**

(21) Numéro de dépôt: **18706722.8**

(22) Date de dépôt: **20.02.2018**

(51) Int Cl.:
**H04B 1/7073** (2011.01)

(86) Numéro de dépôt international:
**PCT/EP2018/054184**

(87) Numéro de publication internationale:
**WO 2018/158113 (07.09.2018 Gazette 2018/36)**

(54) **PROCÉDÉ D'ESTIMATION D'UN ÉCART D'HORLOGE ENTRE UN ÉMETTEUR ET UN RÉCEPTEUR**

VERFAHREN ZUR SCHÄTZUNG EINES TAKTVERSATZES ZWISCHEN EINEM SENDER UND EINEM EMPFÄNGER

METHOD FOR ESTIMATING A CLOCK SKEW BETWEEN A TRANSMITTER AND A RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2017 FR 1751626**

(43) Date de publication de la demande:
**08.01.2020 Bulletin 2020/02**

(73) Titulaire: **Safran Electronics & Defense
92100 Boulogne-Billancourt (FR)**

(72) Inventeur: **CHIODINI, Alain
92100 Boulogne Billancourt (FR)**

(74) Mandataire: **Cabinet Le Guen Maillet
3, impasse de la Vigie
CS 71840
35418 Saint-Malo Cedex (FR)**

(56) Documents cités:
**WO-A1-2007/103099      US-A1- 2015 236 735**

**Description**

L'invention concerne un procédé d'estimation d'un écart d'horloge entre un émetteur et un récepteur durant une transmission sur un canal de communication d'un deuxième signal de communication issu d'une application à un premier signal de communication d'une technique d'étalement de spectre utilisant un signal, dit signal d'étalement, pour obtenir le deuxième signal de communication et un dispositif mettant en œuvre le procédé. Le document WO2007/103099 divulgue un procédé d'estimation d'un écart d'horloge dans un système de communication sans fil à multiplexage par répartition de fréquence et à entrée multiple sortie multiple.

Au cours de la seconde guerre mondiale, des méthodes de communication sans fils utilisant une technologie dite par étalement de spectre, sont apparues. La technologie d'étalement de spectre avait deux motivations : résister aux efforts des ennemis pour brouiller un signal de communication, puis dissimuler la communication elle-même. La technologie d'étalement de spectre permet en effet d'obtenir des communications bas débit ayant une bonne robustesse.

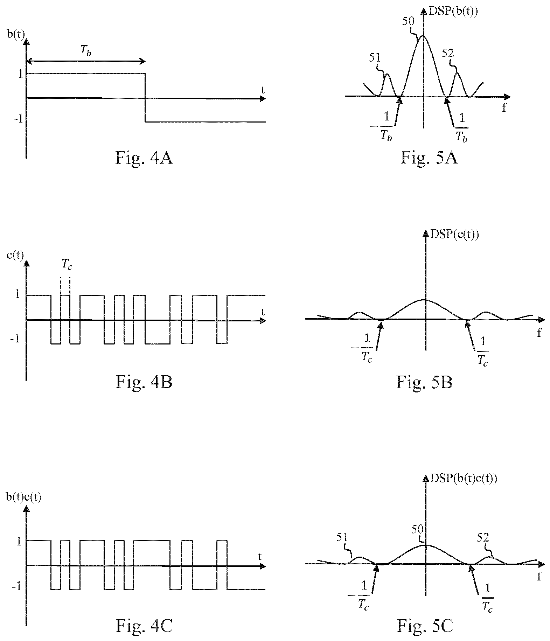

Les Figs. 4A, 4B, 4C, 5A, 5B et 5C illustrent la technologie d'étalement de spectre appliquée à un signal de données binaires.

La **Fig. 4A** illustre schématiquement un signal $b(t)$ de données binaires sur lequel doit être appliqué un étalement de spectre. Dans l'exemple de la Fig. 4A, le signal $b(t)$ prend des valeurs de tension « 1 » ou « -1 », la valeur de tension « 1 » indiquant un « 1 » binaire, la valeur de tension « -1 » indiquant un « 0 » binaire. Dans le signal $b(t)$, chaque bit a une durée $T_b$.

La **Fig. 4B** illustre schématiquement un signal $c(t)$ binaire pseudo aléatoire utilisé dans l'étalement de spectre. Dans l'exemple de la Fig. 4B, le signal $c(t)$ prend des valeurs de tension « 1 » ou « -1 », la valeur de tension « 1 » indiquant un « 1 » binaire, la valeur de tension « -1 » indiquant un « 0 » binaire. Dans le signal $c(t)$ chaque bit a une durée $T_c$ avec la durée $T_c$ très inférieure à la durée $T_b$ ($T_c \ll T_b$). On note que le signal $c(t)$ est parfois appelé *signal d'étalement*. On définit un facteur d'étalement $F_E$ tel que :

$$F_E = \frac{T_b}{T_c}$$

Les signaux d'étalement les plus courants sont les suivants :

- les signaux basés sur des séquences pseudo-aléatoires de type séquences à longueur maximale ;
- les signaux basés sur des séquences de Walsh-Hadamard ;
- les signaux basés sur des codes de Gold ;
- les signaux basés sur des codes de Kasami.

La **Fig. 4C** illustre schématiquement un signal obtenu après application d'un étalement de spectre au signal de données binaires $b(t)$. Lors de l'étalement de spectre, le signal $b(t)$ est combiné au signal d'étalement $c(t)$ : une combinaison d'une valeur de tension « 1 » avec une valeur de tension « 1 » donne une valeur de tension « 1 » ; une combinaison d'une valeur de tension « 1 » avec une valeur de tension « -1 » donne une valeur de tension « -1 » ; une combinaison d'une valeur de tension « -1 » avec une valeur de tension « -1 » donne une valeur de tension « 1 ». Le signal résultant de l'étalement de spectre, ou *signal étalé,* avant modulation est noté $e(t)=b(t) \cdot c(t)$

On peut écrire :

$$e(t) = \left( \sum_{n=-\infty}^{n=+\infty} b(nT_b)\delta(t - nT_b) \right) \cdot \left( \sum_{k=-\infty}^{k=+\infty} c(kT_c)\delta(t - kT_c) \right)$$

où $n$ et $k$ sont deux variables entières et $\sum_{n=-\infty}^{n=+\infty} \delta(t - nT_b)$ (respectivement $\sum_{k=-\infty}^{k=+\infty} \delta(t - kT_c)$) est un peigne de Dirac de période $T_b$ (respectivement $T_c$).

La **Fig. 5A** illustre schématiquement une densité spectrale de puissance du signal de données binaires $b(t)$. La densité spectrale de puissance, notée $DSP(b(t))$, prend la forme d'un lobe principal 50 centré sur une fréquence centrale et ayant une largeur de bande de fréquences de $\frac{2}{T_b}$ entouré de lobes secondaires (51, 52) ayant une largeur de bande de fréquences de $\frac{1}{T_b}$.

La **Fig. 5B** illustre schématiquement une densité spectrale de puissance du signal binaire pseudo-aléatoire $c(t)$. La densité spectrale de puissance, notée $DSP(c(t))$, prend la forme d'un lobe principal centré sur une fréquence centrale et ayant une largeur de bande de fréquences de $\dfrac{2}{Tc}$ entouré de lobes secondaires ayant une largeur de bande de fréquences de $\dfrac{1}{Tc}$.

La **Fig. 5C** illustre schématiquement une densité spectrale de puissance du signal étalé $e(t)$. La densité spectrale de puissance, notée $DSP(e(t))$, prend la forme d'un lobe principal centré sur une fréquence centrale et ayant une largeur de bande de fréquences de $\dfrac{2}{Tc}$ entouré de lobes secondaires ayant une largeur de bande de fréquences de $\dfrac{1}{Tc}$. On

note qu'après application de l'étalement de spectre sur le signal de données binaires $b(t)$, le signal étalé $e(t)$ conserve la même énergie que le signal $b(t)$ mais répartie sur une bande de fréquence plus grande.

Nous supposons que le signal étalé est modulé à l'aide d'un schéma de modulation BPSK (modulation par changement de phase binaire, « Binary Phase Shift Keying » en terminologie anglo-saxonne). On note :

$$tx(t) = BPSK(e(t))$$

où BPSK() représente une fonction de modulation BPSK. On remarque qu'ici le signal e(t) est implicitement modulé suivant une modulation BPSK puisque les valeurs prises par e(t) sont « -1 » et « +1 » ce qui correspond à une définition habituellement choisie pour la modulation BPSK. On pourrait donc écrire :

$$tx(t) = e(t)$$

Suite à une transmission du signal étalé modulé $tx(t)$ sur un canal de communication sans fils par un dispositif émetteur, un signal $rx(t)$ est reçu par un dispositif récepteur.

Lorsque le canal de communication est gaussien, le signal reçu $rx(t)$ peut s'écrire

$$rx(t) = tx(t) + \eta\left(\frac{E_b}{N_0}\right)N(t)$$

où $\eta\left(\dfrac{E_b}{N_0}\right)$ désigne un coefficient de pondération fonction du rapport énergie par bit sur densité spectrale de puissance du bruit $\dfrac{E_b}{N_0}$ (« energy per bit to noise power spectral density ratio » en terminologie anglo-saxonne). Le rapport $\dfrac{E_b}{N_0}$ est donc une métrique représentative du bruit ayant affecté le signal $tx(t)$ lors de sa transmission. $N(t)$ désigne une variable aléatoire gaussienne complexe d'espérance nulle.

Lorsque les dispositifs émetteur et récepteur sont synchronisés en fréquence et en temps, l'opération inverse de l'étalement, appelée étalement inverse est appliquée au signal reçu comme suit :

$$d(t) = rx(t) \cdot \left(\sum_{k=-\infty}^{k=+\infty} c(kT_c)\delta(t - kT_c)\right)$$

Le signal $b(t)$ est estimé de la manière suivante :

$$\hat{b}(nT_b) = BPSK^{-1}\left(\sum_{k=n.F_E}^{k=(n+1)F_E-1} rx(kT_c).c(kT_c)\right), \forall\, n \in \mathbb{Z}$$

où $BPSK^{-1}()$ représente l'opération de démodulation BPSK et le symbole signifie *estimée*. Le signal $\hat{b}(t)$ est par exemple une estimation du signal $b(t)$.

L'estimation du signal $b(t)$ est donc calculée à partir d'un signal bruité ce qui peut entraîner une mauvaise estimation du signal $b(t)$. Par ailleurs, l'hypothèse de synchronisation en temps et fréquences des dispositifs émetteur et récepteur n'est pas forcément vérifiée. En effet, chaque dispositif possède une horloge interne permettant audit dispositif d'effectuer des mesures de temps nécessaires au fonctionnement dudit dispositif. Les horloges internes sont en générale très précises, mais on observe des fluctuations de cette précision dues à de nombreux facteurs tels que des variations de température, des variations d'altitude ou dues à la mobilité des dispositifs provoquant un effet Doppler. Ces fluctuations de la précision des horloges n'affectent pas de manière identique tous les dispositifs d'un système de communication, elles peuvent provoquer des écarts d'horloge entre lesdits dispositifs et donc des désynchronisations.

Il est souhaitable de pallier ces inconvénients de l'état de la technique. Il est notamment souhaitable de proposer une méthode qui permette de resynchroniser temporellement les dispositifs émetteur et récepteur.

Il est par ailleurs souhaitable de proposer une méthode qui soit simple à mettre en œuvre et à faible coût.

Selon un premier aspect de la présente invention, la présente invention concerne un procédé d'estimation d'un écart d'horloge entre un émetteur et un récepteur durant une transmission sur un canal de communication d'un deuxième signal de communication résultant d'une application à un premier signal de communication d'une technique d'étalement de spectre utilisant un signal, dit signal d'étalement. Le procédé comprend suite à la réception du second signal par le récepteur : obtenir au moins un signal, dit signal d'étalement orthogonal, orthogonal au signal d'étalement; pour chaque signal d'étalement orthogonal obtenu, appliquer ledit signal d'étalement orthogonal obtenu au second signal reçu par le récepteur pour obtenir un troisième signal ; obtenir, une estimation d'un rapport énergie par bit sur densité spectrale de puissance d'un bruit de communication ayant affecté le deuxième signal durant sa transmission à partir de chaque troisième signal ; et, estimer une information représentative de l'écart d'horloge entre l'émetteur et le récepteur en fonction de l'estimation dudit rapport.

L'estimation de l'écart d'horloge permet de resynchroniser temporellement les dispositifs émetteur et récepteur.

Selon un mode de réalisation, lorsqu'un seul signal d'étalement orthogonal est déterminé, ledit rapport est estimé à partir d'une fonction prédéterminée d'une moyenne arithmétique d'informations élevées au carré, lesdites informations étant représentatives du bruit de communication ayant affecté le deuxième signal durant sa transmission et ayant été obtenues à partir du troisième signal.

Selon un mode de réalisation, lorsque une pluralité de signaux d'étalement orthogonaux est obtenue, pour chaque signal d'étalement orthogonal de la pluralité, une première moyenne arithmétique est calculée sur des informations élevées au carré, lesdites informations étant représentatives du bruit de communication ayant affecté le deuxième signal durant sa transmission et ayant été obtenues à partir du troisième signal obtenu pour ledit signal d'étalement orthogonal, ledit rapport étant estimé à partir d'une fonction prédéterminée d'une seconde moyenne arithmétique calculée à partir des premières moyennes arithmétiques calculées pour chaque signal d'étalement orthogonal.

L'estimation de l'écart d'horloge est ainsi fiabilisée.

Selon un mode de réalisation, l'information représentative de l'écart d'horloge entre l'émetteur et le récepteur comprend une estimation de la valeur absolue dudit écart d'horloge.

Selon un deuxième aspect de l'invention, l'invention concerne un procédé itératif d'estimation d'un écart d'horloge entre un émetteur et un récepteur. Le procédé selon le premier aspect est mis en œuvre régulièrement sur le deuxième signal, l'information représentative de l'écart d'horloge entre l'émetteur et le récepteur étant remise à jour à chaque itération.

De cette manière, l'écart d'horloge entre l'émetteur et le récepteur est constamment corrigé.

Selon un mode de réalisation, l'information représentative de l'écart d'horloge entre l'émetteur et le récepteur comprend en outre un signe de l'écart d'horloge, ledit signe étant déterminé en comparant un écart d'horloge d'une itération courante avec un écart d'horloge d'une itération précédente, le signe de l'écart d'horloge de l'itération courante étant l'inverse du signe de l'écart d'horloge de l'itération précédente lorsque l'écart d'horloge augmente et le signe de l'écart d'horloge de l'itération courante étant identique au signe de l'écart d'horloge de l'itération précédente lorsque l'écart d'horloge n'augmente pas.

Selon un troisième aspect de l'invention, l'invention concerne un dispositif comprenant des moyens pour mettre en œuvre le procédé selon le premier ou le deuxième aspect.

Selon un quatrième aspect de l'invention, l'invention concerne un programme d'ordinateur, comprenant des instructions pour mettre en œuvre, par un dispositif, le procédé selon le premier ou le deuxième aspect, lorsque ledit programme est exécuté par un processeur dudit dispositif.

Selon un cinquième aspect de l'invention, l'invention concerne des moyens de stockage stockant un programme d'ordinateur comprenant des instructions pour mettre en œuvre, par un dispositif, le procédé selon le premier ou le deuxième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- La Fig. 1 illustre schématiquement un système de communication dans lequel est mise en œuvre l'invention;
- la Fig. 2 illustre schématiquement un module de traitement compris dans un dispositif de réception ;
- la Fig. 3A illustre schématiquement un procédé selon l'invention d'estimation d'un écart d'horloge entre un émetteur et un récepteur;
- la Fig. 3B illustre schématiquement un procédé selon l'invention d'estimation d'une information représentative d'un bruit de communication ayant affecté un signal transmis en utilisant une technologie d'étalement de spectre;
- la Fig. 4A illustre schématiquement un signal de données binaires sur lequel doit être appliqué un étalement de spectre;
- la Fig. 4B illustre schématiquement un signal binaire pseudo aléatoire utilisé dans l'étalement de spectre;
- la Fig. 4C illustre schématiquement un signal obtenu après application d'un étalement de spectre au signal de données binaires;
- la Fig. 5A illustre schématiquement une densité spectrale de puissance du signal de données binaires ;
- la Fig. 5B illustre schématiquement une densité spectrale de puissance du signal binaire pseudo-aléatoire ; et,
- la Fig. 5C illustre schématiquement une densité spectrale de puissance du signal de données binaires sur lequel a été appliqué un étalement de spectre.

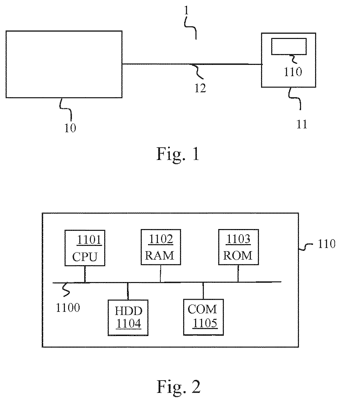

La **Fig. 1** illustre schématiquement un système de communication 1 dans lequel est mise en œuvre l'invention.

Le système de communication 1 comprend un dispositif émetteur 10 et un dispositif récepteur 11. Le dispositif émetteur 10 transmet le signal $tx(t)$ tel que décrit plus haut, *i.e.* le signal $tx(t)$ résultant d'une modulation BPSK du signal étalé $e(t)$, le signal étalé $e(t)$ résultant de l'application du signal d'étalement $c(t)$ au signal de données binaires $b(t)$. Le signal $tx(t)$ est transmis sur un canal de communication sans fils 12 utilisant par exemple les bandes de fréquences connues sous l'appellation « *Bande ISM* » (Industrie, Science et Médical) comprenant des bandes de fréquences pouvant être utilisées librement pour des applications industrielles, scientifiques et médicales.

Le dispositif récepteur 11 reçoit le signal $rx(t)$, tel que décrit plus haut, résultant de la transmission du signal $tx(t)$ sur le canal de transmission sans fil 12. Le dispositif récepteur 11 comprend un module de traitement 110, décrit en relation avec la Fig. 2, apte notamment à fournir une estimation du signal $b(t)$.

La **Fig. 2** illustre schématiquement un exemple d'architecture matérielle du module de traitement 110 compris dans le dispositif récepteur 11.

Selon l'exemple d'architecture matérielle représenté à la Fig. 2, le module de traitement 110 comprend alors, reliés par un bus de communication 1100 : un processeur ou CPU (« Central Processing Unit » en anglais) 1101 ; une mémoire vive RAM (« Random Access Memory » en anglais) 1102; une mémoire morte ROM (« Read Only Memory » en anglais) 1103 ; une unité de stockage telle qu'un disque dur ou un lecteur de support de stockage, tel qu'un lecteur de cartes SD (« Secure Digital » en anglais) 1104 ; au moins une interface de communication 1105 permettant au module de traitement 110 de communiquer avec d'autres modules ou dispositifs. Par exemple l'interface de communication 1105 permet au module de traitement 110 de communiquer avec le dispositif émetteur 10.

Le processeur 1101 est capable d'exécuter des instructions chargées dans la RAM 1002 à partir de la ROM 1003, d'une mémoire externe (non représentée), d'un support de stockage (tel qu'une carte SD), ou d'un réseau de communication.

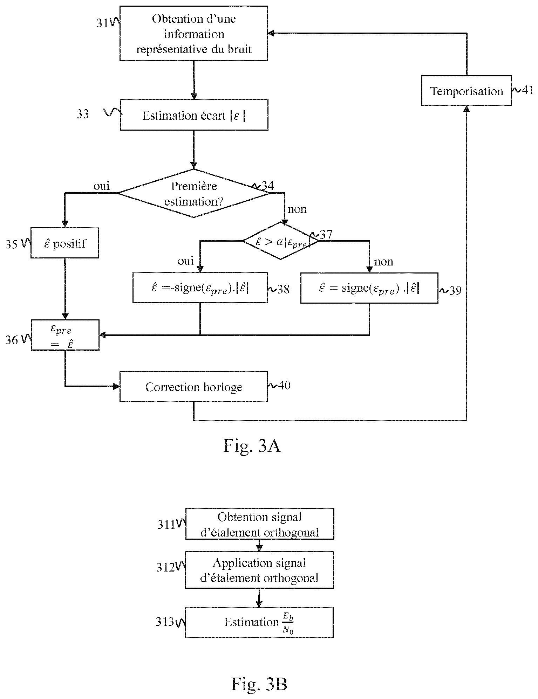

Lorsque le dispositif récepteur 11 est mis sous tension, le processeur 1101 est capable de lire de la RAM 1102 des instructions et de les exécuter. Dans un mode de réalisation, ces instructions forment un programme d'ordinateur causant la mise en œuvre complète ou partielle, par le processeur 1101, des procédés décrits ci-après en relation avec les Figs. 3A et 3B.

Les procédés décrits en relation avec les Figs. 3A et 3B peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 3A** illustre schématiquement un procédé selon l'invention d'estimation d'un écart d'horloge entre l'émetteur 10 et le récepteur 11.

Dans un mode de réalisation, le procédé décrit en relation avec la Fig. 3A est mis en œuvre à intervalles réguliers de manière à corriger régulièrement les éventuelles dérives d'horloge entre le dispositif émetteur 10 et le dispositif récepteur 11.

On suppose ici que le module de traitement 110 du dispositif récepteur reçoit en continu le signal $rx(t)$.

Dans une étape 31, le module de traitement 110 obtient une information représentative du bruit de communication ayant affecté le signal $tx(t)$ durant sa transmission. Pour ce faire le module de traitement 110 met en œuvre un procédé décrit en relation avec la Fig. 3B.

La **Fig. 3B** illustre schématiquement un procédé selon l'invention d'estimation d'une information représentative d'un bruit de communication ayant affecté un signal transmis en utilisant une technologie d'étalement de spectre.

Dans une étape 311, le module de traitement 110 obtient un signal $c^{\perp}(t)$ orthogonal au signal d'étalement $c(t)$ que nous appelons signal d'étalement orthogonal.

Dans un mode de réalisation, le signal d'étalement $c(t)$ est obtenu à partir d'une séquence de Walsh-Hadamard, elle-même obtenue en utilisant, par exemple, une matrice de Hadamard, notée $H_{64}$, de taille $64 \times 64$.

Une matrice de Hadamard se construit récursivement. Soit $H_1$ une matrice de Hadamard de taille $1 \times 1$, $H_2$ une matrice de Hadamard de taille 2x2 et $H_4$ une matrice de Hadamard de taille 4x4 :

$$H_1 = \begin{bmatrix} 1 \end{bmatrix}$$

$$H_2 = \begin{bmatrix} 1 & 1 \\ 1 & -1 \end{bmatrix}$$

$$H_4 = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

On peut donc écrire :

$$H_{2^n} = \begin{bmatrix} H_{2^{n-1}} & H_{2^{n-1}} \\ H_{2^{n-1}} & -H_{2^{n-1}} \end{bmatrix} = H_2 \otimes H_{2^{n-1}}$$

où le symbole $\otimes$ désigne le produit de Kronecker.

Le signal d'étalement $c(t)$ est obtenu en faisant un OU exclusif entre une séquence de Walsh-Hadamard et une séquence PN pseudo aléatoire. Le signal d'étalement $c(t)$ est obtenu, par exemple, à partir d'une séquence de Walsh-Hadamard donnée par une ligne de la matrice de Hadamard $H_{64}$. Dans ce cas, le signal d'étalement orthogonal $c^{\perp}(t)$ est obtenu à partir d'une séquence de Walsh-Hadamard donnée par une des « 63 » lignes restantes de la matrice de Hadamard $H_{64}$.

Dans une étape 312, le module de traitement 110 applique le signal d'étalement orthogonal $c^{\perp}(t)$ au signal reçu $rx(t)$.

$$d^{\perp}(t) = rx(t) \cdot \left( \sum_{k=-\infty}^{k=+\infty} c^{\perp}(kT_c)\delta(t - kT_c) \right)$$

Le module de traitement 110 obtient alors un signal $d^{\perp}(t)$. Il est possible d'introduire le signal reçu $rx(t)$ dans la somme. On obtient alors :

$$d^{\perp}(t) = \left( \sum_{k=-\infty}^{k=+\infty} rx(kT_c)c^{\perp}(kT_c)\delta(t - kT_c) \right)$$

Dans une étape 313, le module de traitement 110 obtient une estimation du rapport $\frac{E_b}{N_0}$, qui est une information représentative du bruit de communication ayant affecté le signal $tx(t)$ durant sa transmission, à partir du signal $d^{\perp}(t)$.

Soit une quantité $Q^{\perp}(t)$ définie de la manière suivante :

$$Q^{\perp}(nT_b) = \sum_{k=nF_E}^{k=(n+1)F_E-1} rx(kT_c)c^{\perp}(kT_c)$$

$$= \sum_{k=nF_E}^{k=(n+1)F_E-1} \left( tx(kT_c) + \eta\left(\frac{E_b}{N_0}\right)N(kT_c) \right)c^{\perp}(kT_c)$$

Le coefficient de pondération $\eta\left(\frac{E_b}{N_0}\right)$ peut être extrait de la somme puisqu'il ne dépend pas de la variable k. On obtient alors :

$$Q^{\perp}(nT_b) = \eta\left(\frac{E_b}{N_0}\right) \cdot \sum_{k=nF_E}^{k=(n+1)F_E-1} N(kT_c).c^{\perp}(kT_c) = \eta\left(\frac{E_b}{N_0}\right)S^{\perp}(nT_b), \forall n \in \mathbb{Z}$$

où

$$S^{\perp}(nT_b) = \sum_{k=nF_E}^{k=(n+1)F_E-1} N(kT_c)c^{\perp}(kT_c), \forall n \in \mathbb{Z}.$$

Comme nous l'avons vu plus haut, $N(t)$ (et donc $N(kT_c)$) désigne une variable aléatoire gaussienne complexe d'espérance nulle. $S^{\perp}(nT_b)$ est aussi une variable aléatoire gaussienne complexe d'espérance nulle de sorte que la quantité $Q^{\perp}(nT_b)$ peut être considérée comme une quantité (*i.e.* une information) représentative du bruit de communication ayant affecté le signal *tx(t)* durant sa transmission. Soit une quantité $\Phi(P)$ correspondant à une moyenne arithmétique de la quantité $Q^{\perp}(nT_b)$ élevée au carré sur $P$ dernières valeurs disponibles de $Q^{\perp}(nT_b)$, chaque valeur disponible de la quantité $Q^{\perp}(nT_b)$ correspondant à un symbole reçu par le module de traitement 110 et issu du signal *rx(t)*.

$$\Phi(P) = \frac{1}{P} \sum_{p=n-P+1}^{p=n} |Q^{\perp}(pT_b)|^2$$

En développant la moyenne arithmétique $\Phi(P)$ on obtient :

$$\Phi(P) = \frac{1}{P}\left(\eta\left(\frac{E_b}{N_0}\right)\right)^2 \sum_{p=n-P+1}^{p=n} |S^{\perp}(pT_b)|^2$$

On note donc qu'il est possible d'obtenir une relation entre la moyenne arithmétique $\Phi(P)$ et le rapport énergie par bit sur densité spectrale de puissance du bruit $\frac{E_b}{N_0}$. Il est alors possible d'obtenir une estimation $\left(\widetilde{\frac{E_b}{N_0}}\right)^{(1)}$ dudit rapport en utilisant une fonction $\Gamma_1$ de la moyenne arithmétique $\Phi(P)$. Dans un mode de réalisation, la fonction $\Gamma_1$ est une fonction du logarithme népérien de $\Phi(P)$, noté $\log(\Phi(P))$, ce qui permet d'obtenir une fonction $\Gamma_1$ représentative d'une droite affine dans un espace à deux dimensions.

$$\left(\widetilde{\frac{E_b}{N_0}}\right)^{(1)} = \Gamma_1\left(\log\big(\Phi(P)\big)\right) = a_1 \log\big(\Phi(P)\big) + b_1$$

$a_1$ et $b_1$ sont des coefficients prédéterminés de la fonction $\Gamma_1$ et l'estimation $\widehat{\left(\frac{E_b}{N_0}\right)}^{(1)}$ est donnée en dB.

Lors de l'étape 313, le module de traitement 110 obtient l'estimation $\widehat{\left(\frac{E_b}{N_0}\right)}^{(1)}$ du rapport $\frac{E_b}{N_0}$ en introduisant le logarithme népérien de la moyenne arithmétique $\Phi(P)$ dans la fonction $\Gamma_1$ dont les paramètres $a_1$ et $b_1$ ont été prédéterminés. Comme décrit plus haut, la moyenne arithmétique $\Phi(P)$ est obtenue en appliquant le signal d'étalement $c^{\perp}(t)$ aux $P$ derniers symboles reçus issus du signal $rx(t)$.

Dans un mode de réalisation, les coefficients $a_1$ et $b_1$ de la fonction $\Gamma_1$ du logarithme népérien de $\Phi(P)$ sont prédéterminés par simulation. Dans ce mode de réalisation, une séquence $PN$ de type MLS (Séquence à longueur maximale : «Maximum Length Séquence » en terminologie anglo-saxonne) obtenue à l'aide d'un registre à décalage à rétroaction linéaire, est utilisée. La séquence $PN$ est produite par exemple à partir d'un polynôme primitif de degré $p$, le degré $p$ étant tel que la longueur de la séquence MLS produite (*i.e.* $2^p - 1$), soit très supérieure à la longueur de la séquence de Walsh-Hadamard choisie. Une transmission sur un canal Gaussien d'un signal modulé obtenu en appliquant le signal d'étalement $c(t)$ au signal $b(t)$ et en appliquant une modulation BPSK au signal étalé obtenu est simulée. Une démodulation et un étalement inverse par un signal d'étalement orthogonal $c^{\perp}(t)$ orthogonal à $c(t)$ sont appliqués au signal issu de la transmission simulée. Par exemple, on obtient par simulation $a_1 = -\frac{13}{3}$ et $b_1 = 0$.

Dans un mode de réalisation, l'estimation du rapport $\frac{E_b}{N_0}$ est améliorée en itérant plusieurs fois les étapes 311 et 312 du procédé décrit en relation avec la Fig. 3B. A chaque itération un signal d'étalement orthogonal différent est utilisé. Dans le mode de réalisation où le signal d'étalement $c(t)$ est obtenu à partir d'une séquence de Walsh-Hadamard donnée par une ligne de la matrice de Hadamard $H_{64}$, chaque signal d'étalement orthogonal est obtenu à partir d'une séquence de Walsh-Hadamard donnée par une des « 63 » lignes restantes de la matrice de Hadamard $H_{64}$, différente de la ligne de la matrice de Hadamard $H_{64}$ utilisée pour générer le signal d'étalement $c(t)$. Dans ce cas de $V=1$ à $V=63$ signaux d'étalement orthogonaux $C_u^{\perp}(t)$ différents ($u \in [1; V]$) peuvent être obtenus à partir de la matrice de Hadamard $H_{64}$.

A chaque itération des étapes 311 et 312 du procédé décrit en relation avec la Fig. 3B, *i.e.* pour chaque signal d'étalement orthogonal, une quantité $Q^{\perp}(nT_b)$, représentative du bruit de communication ayant affecté le signal $tx(t)$ durant sa transmission, est obtenue par le module de traitement 110 :

$$Q_u^{\perp}(nT_b) = \sum_{k=nF_E}^{k=(n+1)F_E-1} rx(kT_c)c_u^{\perp}(kT_c)$$

Suite à chaque itération des étapes 311 et 312, lors de l'étape 313, le module de traitement 110 calcule une moyenne arithmétique $\Phi_u(P)$

$$\Phi_u(P) = \frac{1}{P} \sum_{p=n-P+1}^{p=n} |Q_u^{\perp}(pT_b)|^2$$

Lors de l'étape 313, le module de traitement 110 calcule une quantité $\psi(P)$ qui est une moyenne arithmétique calculée sur les $V$ moyennes arithmétiques $\Phi_u(P)$ obtenues à chaque itération des étapes 311 et 312 en appliquant les $V$ signaux d'étalement orthogonaux $C_u^{\perp}(t)$ différents aux $P$ symboles issus du signal reçu $rx(t)$.

$$\psi(P) = \frac{1}{V} \sum_{c_u^{\perp}(t) \in \{c^{\perp}\}} \Phi_u(P)$$

où $\{C^{\perp}\}$ est l'ensemble de $V$ signaux d'étalement orthogonaux $C_u^{\perp}(t)$.

Il est alors possible d'obtenir une estimation $\overline{\left(\frac{E_b}{N_0}\right)}^{(2)}$ du rapport $\frac{E_b}{N_0}$ en utilisant une fonction $\Gamma_2$ de la moyenne arithmétique $\psi(P)$. Dans un mode de réalisation, la fonction $\Gamma_2$ est une fonction du logarithme népérien de $\psi(P)$ ce qui permet d'obtenir une fonction $\Gamma_2$ représentative d'une droite affine dans un espace à deux dimensions.

$$\overline{\left(\frac{E_b}{N_0}\right)}^{(2)} = \Gamma_2\left(log\big(\psi(P)\big)\right) = a_2 log\big(\Phi(P)\big) + b_2$$

$a_2$ et $b_2$ sont des coefficients prédéterminés de la fonction $\Gamma_2$ et l'estimation $\overline{\left(\frac{E_b}{N_0}\right)}^{(2)}$ est donnée en dB. L'estimation $\overline{\left(\frac{E_b}{N_0}\right)}^{(2)}$ est associée à une variance $VAR\left(\overline{\left(\frac{E_b}{N_0}\right)}^{(2)}\right)$ inférieure à une variance $VAR\left(\overline{\left(\frac{E_b}{N_0}\right)}^{(1)}\right)$ associée à l'estimation $\overline{\left(\frac{E_b}{N_0}\right)}^{(1)}$ :

$$VAR\left(\overline{\left(\frac{E_b}{N_0}\right)}^{(2)}\right) = \frac{1}{V} . VAR\left(\overline{\left(\frac{E_b}{N_0}\right)}^{(1)}\right)$$

Dans une étape 33, le module de traitement 110 estime une information représentative d'un écart d'horloge $\varepsilon$ entre le dispositif émetteur 10 et le dispositif récepteur 11.

Soit $\Omega(nT_b)_c$ et $\Omega(nT_b)_{\{c^{\perp}\}}$ deux quantités utilisées dans la détermination de l'écart d'horloge $\varepsilon$ :

$$\Omega(nT_b)_c = \sum_{k=nF_E}^{k=(n+1)F_E-1} rx(kT_c + \varepsilon)c(kT_c)$$

$$\Omega(nT_b)_{\{c^{\perp}\}} = \sum_{c_u^{\perp}\in\{c^{\perp}\}} \sum_{k=nF_E}^{k=(n+1)F_E-1} rx(kT_c + \varepsilon)c_u^{\perp}(kT_c)$$

En appliquant un développement de Taylor au signal $rx(t)$ au voisinage de $kT_c$, on obtient :

$$rx(kT_c + \varepsilon) \simeq rx(kT_c) + \varepsilon \cdot rx'(kT_c)$$

Les quantités $\Omega(nT_b)_c$ et $\Omega(nT_b)_{\{c^{\perp}\}}$ s'écrivent alors :

$$\Omega(nT_b)_c = \sum_{k=nF_E}^{k=(n+1)F_E-1} c(kT_c)\big(rx(kT_c) + \varepsilon \cdot rx'(kT_c)\big)$$

$$\Omega(nT_b)_{\{c^\perp\}} = \sum_{c_u^\perp \in \{C^\perp\}} c_u^\perp(kT_c) \sum_{k=nF_E}^{k=(n+1)F_E-1} \left(rx(kT_c) + \varepsilon \cdot rx'(kT_c)\right)$$

Avec :

$$rx(kT_c) = (tx * h_{RCS})(kT_c) + \eta\left(\frac{E_b}{N_0}\right)(N * h_{RCS})(kT_c)$$

$$rx(kT_c) = h_{CS}(0)BPSK(kT_c) + \eta\left(\frac{E_b}{N_0}\right)\sum_{m=-M_{RCS}}^{m=+M_{RCS}} h_{RCS}(mT_c)\, N\big((k-m)T_c\big)$$

$$rx'(kT_c) = \sum_{m=-M_{CS}}^{m=+M_{CS}} h'_{CS}(mT_c)BPSK\big((k-m)T_c\big)$$

$$+ \eta\left(\frac{E_b}{N_0}\right)\sum_{m=-M_{RCS}}^{m=+M_{RCS}} h'_{RCS}(mT_c)\, N\big((k-m)T_c\big)$$

Où:

- $*$ : désigne l'opération de convolution
- $H_{RCS}$ : désigne un filtre en racine de cosinus surélevé (comprenant $2M_{RCS}$ + 1 coefficients)
- $h'_{RCS} = \dfrac{dh_{RCS}}{dt}$ (*i.e.* dérivée première de $h_{RCS}$)
- $h_{CS} = H_{RCS} * H_{RCS}$ : désigne un filtre en cosinus surélevé (comprenant $2M_{CS}$ + 1 coefficients) obtenu à partir du filtre en racine de cosinus surélevé $H_{RCS}$
- $h'_{CS} = \dfrac{dh_{CS}}{dt}$ (*i.e.* dérivée première de $h_{CS}$)

Nous avons alors :

$$\Omega(nT_b)_c = h_{RC}(0)BPSK(nT_b)F_E + \eta\left(\frac{E_b}{N_0}\right)S(nT_b) + \varepsilon$$

$$\cdot \left(D(nT_b) + \eta\left(\frac{E_b}{N_0}\right)S'(nT_b)\right) = A_c\left(\frac{E_b}{N_0}\right) + \varepsilon \cdot B_c\left(\frac{E_b}{N_0}\right)$$

$$\Omega(nT_b)_{\{c^\perp\}} = \eta\left(\frac{E_b}{N_0}\right)S_\perp(nT_b) + \varepsilon \cdot \eta\left(\frac{E_b}{N_0}\right)S'_\perp(nT_b) = A_{\{c^\perp\}}\left(\frac{E_b}{N_0}\right) + \varepsilon \cdot B_{\{c^\perp\}}\left(\frac{E_b}{N_0}\right)$$

Avec :

$$D(nT_b) = \sum_{k=nF_E}^{k=(n+1)F_E-1} c(kT_c) \sum_{m=-M_{CS}}^{m=+M_{CS}} h'_{CS}(mT_c)BPSK\big((k-m)T_c\big)$$

$$S(nT_b) = \sum_{k=nF_E}^{k=(n+1)F_E-1} c(kT_c) \sum_{m=-M_{RCS}}^{m=+M_{RCS}} h_{RCS}(mT_c) N\big((k-m)T_c\big)$$

$$S'(nT_b) = \sum_{k=nF_E}^{k=(n+1)F_E-1} c(kT_c) \sum_{m=-M_{RCS}}^{m=+M_{RCS}} h'_{RCS}(mT_c) N\big((k-m)T_c\big)$$

$$S_\perp(nT_b) = \sum_{c_u^\perp \in \{C^\perp\}} \sum_{k=nF_E}^{k=(n+1)F_E-1} c_u^\perp(kT_c) \sum_{m=-M_{RCS}}^{m=+M_{RCS}} h_{RCS}(mT_c) N\big((k-m)T_c\big)$$

$$S'_\perp(nT_b) = \sum_{c_u^\perp \in \{C^\perp\}} \sum_{k=nF_E}^{k=(n+1)F_E-1} c_u^\perp(kT_c) \sum_{m=-M_{RCS}}^{m=+M_{RCS}} h'_{RCS}(mT_c) N\big((k-m)T_c\big)$$

Nous constatons que les quantités $\Omega(nT_b)_c$ et $\Omega(nT_b)_{\{c\perp\}}$ dépendent de l'écart $\varepsilon$. Pour déterminer l'écart $\varepsilon$, nous formons les quantités auxiliaires suivantes :

$$\overline{|\Omega_c|^2_{\bar{P}}} = \frac{1}{\bar{P}} \sum_{k=n-\bar{P}+1}^{k=n} |\Omega_c(kT_b)|^2$$

$$\overline{\left|\Omega_{\{c\perp\}}\right|^2_{\bar{P}}} = \frac{1}{\bar{P}} \sum_{k=n-\bar{P}+1}^{k=n} \left|\Omega_{\{c\perp\}}(kT_b)\right|^2$$

où $\bar{\bar{P}}$ est un nombre entier positif prédéfini. On effectue donc une somme des valeurs absolues élevées au carré des $\bar{\bar{P}}$ dernières valeurs des quantités $\Omega(nT_b)_c$ et $\Omega(nT_b)_{\{c\perp\}}$. Pour un rapport $\left(\frac{E_b}{N_0}\right)$ donné, les quantités auxiliaires peuvent être modélisées à l'aide d'une fonction polynômiale du second degré de la manière suivante :

$$\overline{|\Omega_c|^2_{\bar{P}}} = a_2^c \varepsilon^2 + a_1^c \varepsilon + a_0^c = f(\varepsilon)$$

$$\overline{\left|\Omega_{\{c\perp\}}\right|^2_{\bar{P}}} = a_2^{\{c\perp\}} \varepsilon^2 + a_1^{\{c\perp\}} \varepsilon + a_0^{\{c\perp\}} = g(\varepsilon)$$

$f()$ et $g()$ sont des fonctions polynômiales paires. Par conséquent, seule la valeur absolue de l'écart $|\varepsilon|$ peut être mesurée et $a_1^c = a_1^{\{c\perp\}} = 0$. $a_0^c, a_2^c, a_0^{\{c\perp\}}$ et $a_2^{\{c\perp\}}$ sont des coefficients fonction du rapport $\frac{E_b}{N_0}$ (ou d'un rapport $\frac{S}{N}$ puisque $\frac{S}{N} = \frac{R}{W} \cdot \frac{E_b}{N_0}$ où $R$ et $W$ désignent respectivement un taux binaire et une bande passante du récepteur). Chaque coefficient $a_0^c, a_2^c, a_0^{\{c\perp\}}$ et $a_2^{\{c\perp\}}$ est décrit par un modèle mathématique prédéterminé à l'aide d'un simulateur.

$$a_0^c = h_0^c \left(\frac{E_b}{N_0}\right), a_2^c = h_2^c \left(\frac{E_b}{N_0}\right), a_0^{\{c^\perp\}} = h_0^{\{c^\perp\}} \left(\frac{E_b}{N_0}\right), a_2^{\{c^\perp\}} = h_2^{\{c^\perp\}} \left(\frac{E_b}{N_0}\right)$$

Le simulateur comprend un émetteur, un canal (gaussien) et un récepteur. Le signal reçu, sur-échantillonné avec une période de sur-échantillonnage donnée, est supposé parfaitement synchronisé en fréquence (c'est-à-dire que l'écart de fréquence entre le signal émis et le signal reçu est nul). Une première plage de variation est définie pour le rapport $\frac{E_b}{N_0}$ (ou $\frac{S}{N}$ ) et une deuxième plage de variation est définie pour l'écart temporel $\varepsilon$ (exprimé en multiple entier, éventuellement nul, de la période de sur-échantillonnage). Des simulations sont effectuées à l'aide de deux boucles imbriquées : une première boucle permet de faire varier le rapport $\frac{E_b}{N_0}$ (ou $\frac{S}{N}$ ) sur la première plage de variation et une deuxième boucle permet de faire varier l'écart temporel $\varepsilon$ sur la deuxième plage de variation. L'objectif est de déterminer les quantités auxiliaires $\overline{|\Omega_c|_{\overline{P}}^2}$ et $\overline{|\Omega_{\{c^\perp\}}|_{\overline{P}}^2}$. Pour chaque valeur du rapport $\frac{E_b}{N_0}$ (ou $\frac{S}{N}$ ) de la première plage de variation, deux ensembles finis de valeurs des quantités auxiliaires $\overline{|\Omega_c|_{\overline{P}}^2}$ et $\overline{|\Omega_{\{c^\perp\}}|_{\overline{P}}^2}$ sont obtenus en faisant varier l'écart temporel $\varepsilon$ sur la deuxième plage de variation. Le cardinal de ces deux ensembles est donc égal au nombre d'écarts temporels $\varepsilon$ simulés. Les deux ensembles sont ensuite interpolés en utilisant les fonctions polynômiales *f* et *g*, pour obtenir pour chaque valeur du rapport $\frac{E_b}{N_0}$ (ou $\frac{S}{N}$ ), deux couples de coefficients: $\left( a_0^c \left(\frac{E_b}{N_0}\right), a_2^c \left(\frac{E_b}{N_0}\right) \right)$ et $\left( a_0^{\{c^\perp\}} \left(\frac{E_b}{N_0}\right), a_2^{\{c^\perp\}} \left(\frac{E_b}{N_0}\right) \right)$. L'ensemble de ces couples forme deux tableaux à deux colonnes dont le nombre de lignes correspond au nombre de valeurs simulées du rapport $\frac{E_b}{N_0}$ (ou $\frac{S}{N}$ ).

L'interpolation des valeurs des colonnes de ces tableaux à l'aide d'autres fonctions polynômiales *h* (de degré $\geq 2$) permet de modéliser respectivement les coefficients $a_0^c, a_2^c, a_0^{\{c^\perp\}}$ et $a_2^{\{c^\perp\}}$ en fonction du rapport signal sur bruit et d'obtenir les modèles mathématiques suivants :

$$a_0^c = h_0^c \left(\frac{E_b}{N_0}\right), \quad a_2^c = h_2^c \left(\frac{E_b}{N_0}\right), \quad a_0^{\{c^\perp\}} = h_0^{\{c^\perp\}} \left(\frac{E_b}{N_0}\right)$$ 

et $a_2^{\{c^\perp\}} = h_2^{\{c^\perp\}} \left(\frac{E_b}{N_0}\right)$

Soit un estimateur $\xi(\varepsilon)$ :

$$\xi(\varepsilon) = \frac{\overline{|\Omega_{\{c^\perp\}}|_{\overline{P}}^2}}{\overline{|\Omega_c|_{\overline{P}}^2}} = \frac{g(\varepsilon)}{f(\varepsilon)} = \frac{h_2^{\{c^\perp\}} \left(\frac{E_b}{N_0}\right) \varepsilon^2 + h_0^{\{c^\perp\}} \left(\frac{E_b}{N_0}\right)}{h_2^c \left(\frac{E_b}{N_0}\right) \varepsilon^2 + h_0^c \left(\frac{E_b}{N_0}\right)}$$

Une fois les fonctions $h_0^c \left(\frac{E_b}{N_0}\right), \ h_2^c \left(\frac{E_b}{N_0}\right), \ h_0^{\{c^\perp\}} \left(\frac{E_b}{N_0}\right), \ h_2^{\{c^\perp\}} \left(\frac{E_b}{N_0}\right)$ déterminées, il est possible de calculer des valeurs numériques de l'estimateur $\xi(\varepsilon)$ ce qui permet de déduire $|\hat{\varepsilon}|$:

$$|\hat{\varepsilon}| = \sqrt{\dfrac{h_0^{\{c^\perp\}}\left(\dfrac{E_b}{N_0}\right) - h_0^c\left(\dfrac{E_b}{N_0}\right)\xi(\varepsilon)}{h_2^c\left(\dfrac{E_b}{N_0}\right)\xi(\varepsilon) - h_2^{\{c^\perp\}}\left(\dfrac{E_b}{N_0}\right)}}$$

Afin de diminuer la complexité de l'estimation, il est possible de simplifier l'estimateur $\xi(\varepsilon)$ ci-dessus en ne considérant que l'une ou l'autre des quantités $\Omega(nT_b)_c$ et $\Omega(nt_b)_{\{c^\perp\}}$.

Dans un mode de réalisation, la quantité $\overline{\left|\Omega_{\{c^\perp\}}\right|^2_{\bar{P}}}$, déterminée à l'aide d'un ensemble $\{c^\perp\}$ réduit est utilisée :

$$\xi(\varepsilon) = \overline{\left|\Omega_{\{c^\perp\}}\right|^2_{\bar{P}}} = g(\varepsilon) = h_2^{\{c^\perp\}}\left(\dfrac{E_b}{N_0}\right)\varepsilon^2 + h_0^{\{c^\perp\}}\left(\dfrac{E_b}{N_0}\right)$$

Comme précédemment, la connaissance de la valeur numérique $\xi(\varepsilon)$ permet de déduire $|\hat{\varepsilon}|$:

$$|\hat{\varepsilon}| = \sqrt{\dfrac{\xi(\varepsilon) - h_0^{\{c^\perp\}}\left(\dfrac{E_b}{N_0}\right)}{h_2^{\{c^\perp\}}\left(\dfrac{E_b}{N_0}\right)}}$$

Dans une étape 34, le module de traitement 110 vérifie si l'estimation de la valeur absolue de l'écart d'horloge $|\hat{\varepsilon}|$ est une première estimation.

S'il s'agit d'une première estimation, le module de traitement 110 considère que l'écart d'horloge est de signe positif lors d'une étape 35.

Dans une étape 36, le module de traitement 110 sauvegarde la valeur de l'estimation de l'écart d'horloge $\hat{\varepsilon}$ dans une variable $\varepsilon_{pre}$.

Dans une étape 41, le module de traitement 110 corrige son horloge interne en utilisant la valeur de l'estimation de l'écart d'horloge $\hat{\varepsilon}$.

S'il ne s'agit pas d'une première estimation, lors d'une étape 37, le module de traitement 110 compare l'estimation de l'écart d'horloge $\hat{\varepsilon}$ avec la variable sauvegardée dans la variable $\varepsilon_{pre}$ qui correspond à l'estimation précédente de l'écart d'horloge $\hat{\varepsilon}$. Si $\varepsilon > \alpha|\varepsilon_{pre}|$, avec $\alpha$ désignant un coefficient $\geq 1$, *i.e.* si l'écart d'horloge augmente significativement, le module de traitement considère que le signe de l'écart d'horloge a mal été déterminé lors de l'estimation précédente de l'écart d'horloge. Dans ce cas, lors d'une étape 38, le module de traitement 110 considère que le signe de l'estimation de l'écart d'horloge $\hat{\varepsilon}$ est l'inverse du signe de l'estimation précédente de l'écart $\varepsilon_{pre}$. Sinon, lors d'une étape 39, le module de traitement 110 considère que le signe de l'estimation de l'écart d'horloge $\hat{\varepsilon}$ est le même que le signe de l'estimation précédente de l'écart $\varepsilon_{pre}$.

Suite aux étapes 38 et 39, le module de traitement retourne à l'étape 36.

Suite à l'étape 40, le module de traitement 110 se met en attente pendant une durée prédéfinie avant de procéder à une nouvelle estimation de l'écart d'horloge $\hat{\varepsilon}$.

## Revendications

1. Procédé d'estimation d'un écart d'horloge entre un émetteur et un récepteur durant une transmission sur un canal de communication d'un deuxième signal de communication résultant d'une application à un premier signal de communication d'une technique d'étalement de spectre utilisant un signal, dit signal d'étalement, **caractérisé en ce que** le procédé comprend les étapes suivantes exécutées par un dispositif suite à la réception dudit deuxième signal par le récepteur :

   obtenir (311) au moins un signal, dit signal d'étalement orthogonal, orthogonal au signal d'étalement;

pour chaque signal d'étalement orthogonal obtenu, appliquer (312) ledit signal d'étalement orthogonal obtenu au second signal reçu par le récepteur pour obtenir un troisième signal ;

obtenir (313) une estimation d'un rapport énergie par bit sur densité spectrale de puissance d'un bruit de communication ayant affecté le deuxième signal durant sa transmission à partir de chaque troisième signal ; et, estimer (33) une information représentative de l'écart d'horloge entre l'émetteur et le récepteur en fonction de l'estimation dudit rapport.

2. Procédé selon la revendication 1, **caractérisé en ce que**, lorsqu'un seul signal d'étalement orthogonal est déterminé, ledit rapport est estimé à partir d'une fonction prédéterminée d'une moyenne arithmétique d'informations élevées au carré, lesdites informations étant représentatives du bruit de communication ayant affecté le deuxième signal durant sa transmission et ayant été obtenues à partir du troisième signal.

3. Procédé selon la revendication 1, **caractérisé en ce que**, lorsque une pluralité de signaux d'étalement orthogonaux est obtenue, pour chaque signal d'étalement orthogonal de la pluralité, une première moyenne arithmétique est calculée sur des informations élevées au carré, lesdites informations étant représentatives du bruit de communication ayant affecté le deuxième signal durant sa transmission et ayant été obtenues à partir du troisième signal obtenu pour ledit signal d'étalement orthogonal, ledit rapport étant estimé à partir d'une fonction prédéterminée d'une seconde moyenne arithmétique calculée à partir des premières moyennes arithmétiques calculées pour chaque signal d'étalement orthogonal.

4. Procédé selon l'une quelconque des revendications précédentes, **caractérisé en ce que** l'information représentative de l'écart d'horloge entre l'émetteur et le récepteur comprend une estimation de la valeur absolue dudit écart d'horloge.

5. Procédé itératif d'estimation d'un écart d'horloge entre un émetteur et un récepteur, **caractérisé en ce que** le procédé selon l'une quelconque des revendications 1 à 4 est mis en œuvre régulièrement sur le deuxième signal, l'information représentative de l'écart d'horloge entre l'émetteur et le récepteur étant remise à jour à chaque itération.

6. Procédé selon la revendication 5, **caractérisé en ce que** l'information représentative de l'écart d'horloge entre l'émetteur et le récepteur comprend en outre un signe de l'écart d'horloge, ledit signe étant déterminé en comparant un écart d'horloge d'une itération courante avec un écart d'horloge d'une itération précédente, le signe de l'écart d'horloge de l'itération courante étant l'inverse du signe de l'écart d'horloge de l'itération précédente lorsque l'écart d'horloge augmente et le signe de l'écart d'horloge de l'itération courante étant identique au signe de l'écart d'horloge de l'itération précédente lorsque l'écart d'horloge n'augmente pas.

7. Dispositif (110) comprenant des moyens pour mettre en œuvre le procédé selon l'une quelconque des revendications 1 à 6.

8. Programme d'ordinateur, **caractérisé en ce qu'**il comprend des instructions pour mettre en œuvre, par un dispositif (110), le procédé selon l'une quelconque des revendications 1 à 6, lorsque ledit programme est exécuté par un processeur dudit dispositif (110).

9. Moyens de stockage, **caractérisés en ce qu'**ils stockent un programme d'ordinateur comprenant des instructions pour mettre en œuvre, par un dispositif (110), le procédé selon l'une quelconque des revendications 1 à 6, lorsque ledit programme est exécuté par un processeur dudit dispositif (110).

**Patentansprüche**

1. Verfahren zum Schätzen einer Taktabweichung zwischen einem Sender und einem Empfänger während einer Übertragung auf einem Kommunikationskanal eines zweiten Kommunikationssignals, das sich aus einer Anwendung einer Frequenzspreiztechnik auf ein erstes Kommunikationssignal unter Verwendung eines als Spreizsignal bezeichneten Signals ergibt, **dadurch gekennzeichnet, dass** das Verfahren die folgenden Schritte aufweist, die von einer Vorrichtung nach Empfang des zweiten Signals durch den Empfänger ausgeführt werden:

Erhalten (311) von mindestens einem als orthogonales Spreizsignal bezeichneten Signals, das orthogonal zum Spreizsignal ist;
für jedes erhaltene orthogonale Spreizsignal Anwenden (312) des erhaltenen orthogonalen Spreizsignals auf das zweite vom Empfänger empfangene Signal, um ein drittes Signal zu erhalten;

Erhalten (313) einer Schätzung eines Energieverhältnisses pro Bit zur Leistungsspektraldichte eines Kommunikationsrauschens, das das zweite Signal während seiner Übertragung ausgehend von jedem dritten Signal beeinflusst; und

Schätzen (33) einer Information, die für die Taktabweichung zwischen dem Sender und dem Empfänger repräsentativ ist, in Abhängigkeit von der Schätzung des Verhältnisses.

2. Verfahren nach Anspruch 1, **dadurch gekennzeichnet, dass** wenn ein einzelnes orthogonales Spreizsignal bestimmt wird, das Verhältnis ausgehend von einer vorbestimmten Funktion eines arithmetischen Mittels des Quadrats der Informationen geschätzt wird, wobei die Informationen repräsentativ für das Kommunikationsrauschen sind, das das zweite Signal während seiner Übertragung beeinflusst hat und ausgehend vom dritten Signal erhalten wurde.

3. Verfahren nach Anspruch 1, **dadurch gekennzeichnet, dass** wenn eine Vielzahl von orthogonalen Spreizsignalen erhalten wird, für jedes orthogonale Spreizsignal der Vielzahl ein erstes arithmetisches Mittel des Quadrats der Informationen berechnet wird, wobei die Informationen repräsentativ für das Kommunikationsrauschen sind, das das zweite Signal während seiner Übertragung beeinflusst hat und ausgehend von dem dritten Signal erhalten wurde, das für das orthogonale Spreizsignal erhalten wurde, wobei das Verhältnis ausgehend von einer vorbestimmten Funktion eines zweiten arithmetischen Mittels geschätzt wird, das ausgehend von den ersten arithmetischen Mitteln, die für jedes orthogonale Spreizsignal berechnet wurden, berechnet wird.

4. Verfahren nach einem der vorhergehenden Ansprüche, **dadurch gekennzeichnet, dass** die Information, die für die Taktabweichung zwischen dem Sender und dem Empfänger repräsentativ ist, eine Schätzung des Absolutwerts der Taktabweichung aufweist.

5. Iteratives Verfahren zum Schätzen einer Taktabweichung zwischen einem Sender und einem Empfänger, **dadurch gekennzeichnet, dass** das Verfahren nach einem der Ansprüche 1 bis 4 regelmäßig auf dem zweiten Signal ausgeführt wird, wobei die Information, die für die Taktabweichung zwischen dem Sender und dem Empfänger repräsentativ ist, bei jeder Iteration aktualisiert wird.

6. Verfahren nach Anspruch 5, **dadurch gekennzeichnet, dass** die Information, die für die Taktabweichung zwischen dem Sender und dem Empfänger repräsentativ ist, darüber hinaus ein Vorzeichen der Taktabweichung aufweist, wobei das Vorzeichen bestimmt wird, indem eine Taktabweichung einer aktuellen Iteration mit einer Taktabweichung einer vorausgehenden Iteration verglichen wird, wobei das Vorzeichen der Taktabweichung der aktuellen Iteration die Umkehrung des Vorzeichens der Taktabweichung der vorausgehenden Iteration ist, wenn die Taktabweichung zunimmt, und das Vorzeichen der Taktabweichung der aktuellen Iteration identisch zum Vorzeichen der Taktabweichung der vorausgehenden Iteration ist, wenn die Taktabweichung nicht zunimmt.

7. Vorrichtung (110), die Mittel zum Ausführen des Verfahrens nach einem der Ansprüche 1 bis 6 aufweist.

8. Computerprogramm, **dadurch gekennzeichnet, dass** es Anweisungen aufweist, um das Verfahren nach einem der Ansprüche 1 bis 6 durch eine Vorrichtung (110) auszuführen, wenn das Programm von einem Prozessor der Vorrichtung (110) ausgeführt wird.

9. Mittel zum Speichern, **dadurch gekennzeichnet, dass** sie ein Computerprogramm speichern, das Anweisungen aufweist, um das Verfahren nach einem der Ansprüche 1 bis 6 durch eine Vorrichtung (110) auszuführen, wenn das Programm von einem Prozessor der Vorrichtung (110) ausgeführt wird.

**Claims**

1. Method for estimating a clock skew between a transmitter and a receiver during a transmission over a communication channel of a second communication signal resulting from an application to a first communication signal of a spread-spectrum technique using a signal, called spreading signal, **characterized in that** the method comprises the following steps executed by a device following the reception of said second signal by the receiver: obtaining (311) at least one signal, called orthogonal spreading signal, orthogonal to the spreading signal;

for each orthogonal spreading signal obtained, applying (312) said obtained orthogonal spreading signal to the second signal received by the receiver so as to obtain a third signal;

obtaining (313) an estimate of a ratio of energy per bit to power spectral density of a communication noise that has affected the second signal during its transmission on the basis of each third signal; and,

estimating (33) an item of information representative of the clock skew between the transmitter and the receiver according to the estimate of said ratio.

2. Method according to Claim 1, **characterized in that**, when a single orthogonal spreading signal is determined, said ratio is estimated on the basis of a predetermined function of an arithmetic mean of squared items of information, said items of information being representative of the communication noise that has affected the second signal during its transmission and has been obtained on the basis of the third signal.

3. Method according to Claim 1, **characterized in that**, when a plurality of orthogonal spreading signals is obtained, for each orthogonal spreading signal of the plurality, a first arithmetic mean is calculated on squared items of information, said items of information being representative of the communication noise that has affected the second signal during its transmission and has been obtained on the basis of the third signal obtained for said orthogonal spreading signal, said ratio being estimated on the basis of a predetermined function of a second arithmetic mean calculated on the basis of the first arithmetic means calculated for each orthogonal spreading signal.

4. Method according to any one of the preceding claims, **characterized in that** the item of information representative of the clock skew between the transmitter and the receiver comprises an estimate of the absolute value of said clock skew.

5. Iterative method for estimating a clock skew between a transmitter and a receiver, **characterized in that** the method according to any one of Claims 1 to 4 is implemented regularly on the second signal, the item of information representative of the clock skew between the transmitter and the receiver being updated on each iteration.

6. Method according to Claim 5, **characterized in that** the item of information representative of the clock skew between the transmitter and the receiver further comprises a sign of the clock skew, said sign being determined by comparing a clock skew of a current iteration with a clock skew of a preceding iteration, the sign of the clock skew of the current iteration being the inverse of the sign of the clock skew of the preceding iteration when the clock skew increases and the sign of the clock skew of the current iteration being identical to the sign of the clock skew of the preceding iteration when the clock skew does not increase.

7. Device (110) comprising means for implementing the method according to any one of Claims 1 to 6.

8. Computer program, **characterized in that** it comprises instructions for implementing, by means of a device (110), the method according to any one of Claims 1 to 6, when said program is executed by a processor of said device (110).

9. Storage means, **characterized in that** they store a computer program comprising instructions for implementing, by means of a device (110), the method according to any one of Claims 1 to 6, when said program is executed by a processor of said device (110).

Fig. 1

Fig. 2

EP 3 590 198 B1

Fig. 3A

Fig. 3B

18

Fig. 4A

Fig. 5A

Fig. 4B

Fig. 5B

Fig. 4C

Fig. 5C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2007103099 A